(19) Europäisches Patentamt / European Patent Office / Office européen des brevets

(11) **EP 4 257 634 A1**

(12) **EUROPEAN PATENT APPLICATION**
published in accordance with Art. 153(4) EPC

(43) Date of publication:
**11.10.2023  Bulletin 2023/41**

(21) Application number: **21907172.7**

(22) Date of filing: **17.12.2021**

(51) International Patent Classification (IPC):
**C08J 5/18** (2006.01)          **C08L 27/08** (2006.01)
**C08K 5/00** (2006.01)          **B29C 48/08** (2019.01)
**B29C 55/16** (2006.01)

(52) Cooperative Patent Classification (CPC):
**B29C 48/08; B29C 55/16; C08J 5/18; C08K 5/00;
C08L 27/08**

(86) International application number:
**PCT/KR2021/019321**

(87) International publication number:
**WO 2022/131868 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2020  CN 202011499165**

(71) Applicant: **SK Geo Centric Co., Ltd.**
**Jongno-gu**
**Seoul 03161 (KR)**

(72) Inventors:
• **KA, Duyoun**
  **Daejeon 34124 (KR)**
• **LEE, Jaebok**
  **Daejeon 34124 (KR)**
• **JO, Byoungcheon**
  **Daejeon 34124 (KR)**
• **KWON, Soonmin**
  **Daejeon 34124 (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **COMPOSITION FOR PRODUCTION OF POLYVINYLIDENE CHLORIDE MONOLAYER FILM WITH IMPROVED SHRINKAGE AND FOOD WRAPPING PACKAGE INCLUDING SAME**

(57)    An embodiment of the present invention provides a monolayer film containing a vinylidene chloride-based copolymer composition containing: a vinyl chloride comonomer-containing first polyvinylidene chloride copolymer (PVDC-VC); and a methyl acrylate comonomer-containing second polyvinylidene chloride copolymer (PVDC-MA), wherein a crystallinity of the vinylidene chloride-based copolymer composition is 25 to 45%, a container including the same, and a method for producing a monolayer film.

EP 4 257 634 A1

FIG. 1

**Description**

[Technical Field]

The present invention relates to a polyvinylidene chloride composition for producing a monolayer film having an improved shrinkage and a food packaging container containing the same.

[Background Art]

In the field of food packaging, when products sensitive to oxygen or moisture are packaged, contact with oxygen and moisture should be prevented in order to prevent food spoilage, and therefore a general food packaging film includes a barrier layer. Among barrier materials, polyvinylidene chloride (PVDC) has excellent oxygen and moisture barrier properties, and in the cases of barrier materials such as ethylene vinyl alcohol (EVOH) and nylon, the oxygen barrier property is rapidly deteriorated when the ambient humidity is high, whereas PVDC exhibits excellent barrier properties regardless of humidity. Therefore, PVDC has been widely used in a food packaging film that requires a sterilization process using high-temperature steam, such as retort packaging used for fresh foods, or is used in hot and humid climates.

Since the food packaging films require a wide variety of physical properties depending on the type of food to be packaged, packaging process, transport, storage conditions, and the like, it is common to produce a multi-layer film by bonding films of various materials to satisfy these physical properties. Among them, a multi-layer thermal lamination method has been widely used because of its wide selection of materials and its relatively simple production process. In order to apply PVDC to such a thermal lamination film, a PVDC monolayer film is required, and a cast film obtained by a casting process or a film to which a double bubble extrusion process is applied is used.

Among them, the double bubble extrusion process has advantages in that the equipment investment cost is low and the physical properties of the film are more uniform compared to the cast film production process. When the PVDC monolayer film is molded by applying the double bubble extrusion process, the film inevitably shrinks. Unlike materials such as polyolefin, which have a significantly fast crystallization rate and may maintain the shape of the film relatively well, PVDC is a polymer having a significantly slow crystallization rate, such that crystallization may proceed slowly until the later part of the film molding process, and as a result, the film cannot maintain its shape and shrinks at a certain rate. The formation of polymer crystals (crystalline) is derived from an alignment of polymer chains, and as a volume of the polymer shrinks, an area of the film also shrinks. In this case, when the film shrinks, since an edge portion becomes thicker and the shape becomes irregular, more parts of the produced film should be cut as a shrinkage is higher. The cut parts are generally used for low-cost recycled products, but materials that are easily deformed by heat, such as PVDC, are discarded in some cases, which causes a reduction in cost-effectiveness. In particular, when a high-temperature aging treatment such as heat setting is performed to improve high-temperature stability of the monolayer film, the shrinking of the film may be maximized due to additional crystallization and a stress relaxation phenomenon in which the polymer tends to return to its original state.

Although various methods for reducing the shrinking of the film are known, it is not desirable that additional equipment is required or physical properties other than the shrinkage are deteriorated.

For example, there is a method of controlling a shrinkage by crosslinking a film using strong light irradiation, such as e-beam crosslinking, but to this end, expensive equipment is required and a lot of energy is consumed in the light irradiation process.

As another example, there is a method of mixing materials having a low shrinkage, but in the case of barrier films for food packaging, selection of materials is limited because high barrier properties are also required for the mixed materials.

Patent Document 1 (Japanese Patent No. 3461369 B2) relates to a barrier blend for a food packaging film, and has the purpose of promoting the efficiency of processing by lowering an extrusion temperature and improving an extrusion rate compared to the related art. Patent Document 1 has a technical feature of using a copolymer blend containing 90 to 50 wt% of a vinylidene chloride-vinyl chloride copolymer and 10 to 50 wt% of a vinylidene chloride-methyl acrylate copolymer, but is for producing a multi-layer film by coextrusion to improve thermal shrinkability of the produced film, and is not a technique for improving a shrinkage of a monolayer film by the double bubble extrusion process. In addition, since a content of a methyl acrylate comonomer in the vinylidene chloride-methyl acrylate copolymer is high, when the composition of the present invention is applied to produce a monolayer film, it is analyzed that a crystallinity, crystallization rate, and content of crystals of the composition cannot be easily controlled in the process.

Patent Document 2 (Japanese Patent Laid-Open Publication No. 1995-076643 A) relates to a barrier blend and a food packaging film containing the same, and is technically characterized by a copolymer blend composed of 2 to 20 wt% of a CO-modified ethylene vinyl acetate copolymer or a CO-modified ethylene alkyl acrylate copolymer with respect to the total weight of a vinylidene chloride-vinyl chloride copolymer, a vinylidene chloride-methyl acrylate copolymer, or a mixture thereof and the copolymer blend. However, like Patent Document 1, Patent Document 2 relates to production of a multi-layer film and is different from the present invention in the technical field, and it is analyzed that a crystallinity, crystallization rate, and content of crystals of the composition cannot be easily controlled.

**[Disclosure]**

[Technical Problem]

In the present invention, while conducting studies to reduce a shrinkage of a PVDC-VC monolayer film suitable for a thermal lamination method, it was found that in a case where a monolayer film was produced by mixing a PVDC-MA product with PVDC-VC under specific conditions, the shrinking of the film after heat setting was reduced.
In addition, PVDC-MA is a material having a barrier property equivalent to that of PVDC-VC, and has an advantage of not deteriorating barrier properties of the entire film after mixing these resins.

[Technical Solution]

In one general aspect, a monolayer film contains a vinylidene chloride-based copolymer composition containing: a vinyl chloride comonomer-containing first polyvinylidene chloride copolymer (PVDC-VC); and a methyl acrylate comonomer-containing second polyvinylidene chloride copolymer (PVDC-MA), wherein a crystallinity of the vinylidene chloride-based copolymer composition is 25 to 45%.
The first polyvinylidene chloride copolymer may be contained in an amount of more than 50 wt% and less than 90 wt% with respect to the total weight of the monolayer film, and the second polyvinylidene chloride copolymer may be contained in an amount of more than 10 wt% and less than 50 wt% with respect to the total weight of the monolayer film.
The first polyvinylidene chloride copolymer may contain 10 to 25 wt% of the vinyl chloride comonomer, and the second polyvinylidene chloride copolymer may contain 2 to 8 wt% of the methyl acrylate comonomer.
A crystallization rate of the vinylidene chloride-based copolymer composition may be 7 to 25 minutes.
A content of crystals melted at 170°C of the vinylidene chloride-based copolymer composition may be 5 to 45% of the total content of crystals.
The monolayer film may further contain a plasticizer, an additive, or a combination thereof.
The plasticizer may include epoxidized soybean oil (ESO), dibutyl sebacate (DBS), acetyl tri-n-butyl citrate (ATBC), or a combination thereof.
The additive may include a polyolefin-based wax, an oxidized polyolefin-based wax, an acrylic wax, an ester-based wax, an amide-based wax, a stearic acid salt, derivatives of the additives, or a combination thereof.
In another general aspect, a method for producing a monolayer film includes: a) melting and extruding a vinylidene chloride-based polymer mixture; b) heat-stretching the extrudate in at least a biaxial orientation; and c) heat setting the stretched product.
The step b) may be performed by simultaneous biaxial stretching in which the extrudate is simultaneously stretched in a longitudinal orientation and a transverse orientation.
The step b) may be performed at a temperature higher than a glass transition temperature (Tg) of the extrudate and lower than a melting temperature (Tm) of the extrudate.
In still another general aspect, a container includes the monolayer film.

[Advantageous Effects]

As set forth above, when a PVDC-based monolayer film is produced, a shrinkage of the film may be reduced to significantly improve cost-effectiveness.
When a PVDC-based monolayer film is produced by applying a double bubble extrusion process, a double bubble is symmetrically formed, such that a normal monolayer film may be produced and process efficiency may be improved.

[Description of Drawings]

FIG. 1 is a schematic view of a process of producing a PVDC monolayer film.
FIGS. 2A to 2C are measurement results using differential scanning calorimetry (DSC), in which FIG. 2A is a graph showing contents of crystals melted at 170°C of monolayer films produced in Examples 1 to 3 and Comparative Examples 1 and 2, FIG. 2B is a graph showing crystallization rates of the monolayer films produced in Examples 1 to 3 and Comparative Examples 1 and 2, and FIG. 2C is a graph showing a DSC measurement sequence for calculating a crystallinity of the monolayer film.

FIGS. 3A and 3B are photographs showing double bubble shapes produced by Example 1 and Comparative Example 2.

[Best Mode]

The advantages and features of the present invention and methods accomplishing them will become apparent from embodiments described below in detail with the accompanying drawings. However, the present invention is not limited to embodiments to be disclosed below, but may be implemented in various different forms. These embodiments will be provided only in order to make the present invention complete and allow those skilled in the art to completely recognize the scope of the present invention, and the present invention will be defined by the scope of the claims. Specific contents for implementing the present invention will be described in detail with reference to the accompanying drawings. The same reference numerals refer to the same components regardless of the drawings. The term "and/or" includes any and all combinations of one or more of the listed items.

Unless defined otherwise, all terms (including technical and scientific terms) used in the present specification have the same meanings as commonly understood by those skilled in the art to which the present invention pertains. Throughout the present specification, unless explicitly described to the contrary, "comprising" any components will be understood to imply further inclusion of other components rather than the exclusion of any other components. In addition, singular forms are intended to include plural forms, unless the context clearly indicates otherwise.

In the present specification, it will be understood that when an element such as a layer, a film, a region, a plate, or the like, is referred to as being "on" or "above" another element, it may be directly on another element or may have an intervening element present therebetween.

An embodiment of the present invention provides a monolayer film containing a vinylidene chloride-based copolymer composition. The monolayer film contains a vinylidene chloride-based copolymer composition containing: a vinyl chloride comonomer-containing first polyvinylidene chloride copolymer (PVDC-VC); and a methyl acrylate comonomer-containing second polyvinylidene chloride copolymer (PVDC-MA), wherein a crystallinity of the vinylidene chloride-based copolymer composition is 25 to 45%.

As described above, when the PVDC-MA copolymer is mixed with the PVDC-VC copolymer and used for producing a monolayer film, a shrinkage of the film may be reduced, and in addition, since the PVDC-MA copolymer is a material having a barrier property equivalent to that of the PVDC-VC copolymer, the barrier properties of the entire film may not be deteriorated.

In the case of PVDC-VC, a crystallization rate is relatively fast because the vinyl chloride comonomer has a structure that is chemically similar to vinylidene chloride (VDC), but a final crystallinity is relatively low due to a high content of the VC comonomer. On the other hand, in the case of PVDC-MA, the methyl acrylate comonomer is relatively larger in size than VC and has low structural similarity with VDC, such that the crystallization rate may be relatively slowed down. Therefore, the crystallization rate depends on a content of MA in PVDC-MA. When a slow crystallization rate is advantageous due to a need for post-processing of the film, a product having a content of MA of about 7 to 10 wt% may be used, and a product having a content of MA of about 3 to 6 wt% may be used for a monolayer film in which the shape of the film should be rapidly formed. Meanwhile, for the purpose of producing a PVDC monolayer film, PVDC-VC, which is cheaper for cost-effectiveness and more mature in terms of a resin preparation technique compared to PVDC-MA, may be mainly used.

In the present invention, as a crystallization rate and a melting temperature distribution of crystals resulting from molecular structure characteristics of the PVDC-VC copolymer and the PVDC-MA copolymer are controlled, shrink characteristics of a film produced through a double bubble stretching process may be remarkably improved.

The first polyvinylidene chloride copolymer (PVDC-VC) may be contained in an amount of more than 50 wt% and less than 90 wt% and preferably 60 to 80 wt% with respect to the total weight of the monolayer film, and the second polyvinylidene chloride copolymer (PVDC-MA) may be contained in an amount of more than 10 wt% and less than 50 wt% and preferably 20 to 40 wt% with respect to the total weight of the monolayer film. Within the above content range, shrinking of the monolayer film after heat setting may be reduced, and as PVDC-MA and PVDC-VC are mixed with each other, the barrier properties of the entire film may be maintained without deterioration. In addition, when the content of PVDC-MA is 50 wt% or more with respect to the total weight of the monolayer film, at the time of producing the monolayer film by biaxial stretching, a content of crystals initially formed may be too high, and thus deformation during stretching becomes difficult, such that a bubble is not formed well and an asymmetric bubble shape may appear.

The first polyvinylidene chloride copolymer may contain 10 to 25 wt%, preferably 11 to 20 wt%, and more preferably 12 to 18 wt% of the vinyl chloride comonomer. When the content of the vinyl chloride comonomer is less than 10%, the content of the comonomer is low, such that the melting temperature of the copolymer is increased, and processing using heat, such as extrusion molding, becomes difficult. When the content of the vinyl chloride comonomer exceeds 25%, the shape of the film is not maintained due to a low crystallinity, and usefulness as an oxygen barrier film is lost due to a low oxygen barrier property.

The second polyvinylidene chloride copolymer may contain 2 to 8 wt%, preferably 2.5 to 7 wt%, and more preferably 3 to 6 wt% of the methyl acrylate comonomer. When the content of the methyl acrylate comonomer is less than 2%, the content of the comonomer is low, such that the melting temperature of the copolymer is increased, and processing using heat, such as extrusion molding, becomes difficult. When the content of the methyl acrylate comonomer exceeds 8%, the shape of the film is not maintained due to a low crystallinity, and usefulness as an oxygen barrier film is lost due to a low oxygen barrier property.

Meanwhile, both the polyvinylidene chloride copolymers PVDC-VC and PVDC-MA show a characteristic in which the crystallinity decreases as the content of the comonomer increases, which is a general characteristic of almost all polymer materials. In a case of a homopolymer obtained by polymerization of one kind of monomer, the crystallinity is the highest due to chemical structural similarity. On the other hand, when structurally different monomers are copolymerized, crystals are not formed well due to a difference in chemical structure, such that the crystallinity of the polymer is generally low.

As described above, in the double bubble stretching process, the crystallization rate and the melting temperature distribution of crystals of the copolymer composition are controlled, such that the shrink characteristics of the finally produced monolayer film may be improved.

The crystallinity of the vinylidene chloride-based copolymer composition may be 25 to 45%, preferably 30 to 40%, and more preferably 35 to 38%. The crystallinity of the vinylidene chloride-based copolymer composition represents a value obtained by dividing heat of fusion measured when the crystals formed during a cooling process after melting of the composition are melted again by a theoretically achievable maximum crystallinity of a homopolymer composed of only VDC. This may be represented as wt% of a crystalline phase among the amorphous phase and the crystalline phase in the composition, and the crystallinity may be measured by differential scanning calorimetry (DSC), but the present invention is not limited thereto.

The crystallization rate of the vinylidene chloride-based copolymer composition may be 7 minutes to 25 minutes, preferably 9 minutes to 23 minutes, and more preferably 12 minutes to 20 minutes. The crystallization rate of the vinylidene chloride-based copolymer composition is a value measured under arbitrary conditions to relatively compare rates at which the composition forms polymer crystals after melting, and does not mean a rate at which crystals are formed during the actual film processing process.

Meanwhile, the crystallization rate may be measured by differential scanning calorimetry (DSC), but the present invention is not limited thereto. For example, the measurement of the crystallization rate by DSC may be performed by sealing a sample, applying a DSC sequence of heating (20°C to 180°C), maintaining (180°C, 1 min), cooling (180°C to 130°C), and maintaining (130°C, 60 min), and then measuring the time at a point when the maximum value of the peak is obtained in the obtained crystallization peak according to the time.

A content of crystals melted at 170°C of the vinylidene chloride-based copolymer composition may be 5% to 45%, preferably 7% to 42%, and more preferably 11% to 29%, with respect to the total content of crystals. A content of crystals melted at 170°C of the vinylidene chloride-based copolymer composition is measured by measuring a relative content of crystals formed when the monolayer film composition is cooled after melting for each temperature section, and is represented by a ratio obtained by dividing the content of crystals formed at 170°C, which is the highest temperature measurement section, by the total amount of crystals. The crystals formed at a high temperature of 170°C are related to the crystallization rate and are crystals to be formed first. The content of crystals formed at 170°C may be measured by differential scanning calorimetry (DSC), but the present invention is not limited thereto.

An area of a film to be obtained may be maximized by improving the shrinkage when producing a monolayer film within the above range of the crystallization rate and the above content range of the crystals formed at 170°C.

At least one of the first polyvinylidene chloride copolymer and the second polyvinylidene chloride copolymer may contain a plasticizer, an additive, or a combination thereof.

The plasticizer is for reducing a viscosity of a melt of the polyvinylidene chloride copolymer, and is used to improve flexibility, processing workability, or expansibility of the film. For example, the plasticizer may include epoxidized soybean oil (ESO), dibutyl sebacate (DBS), acetyl tri-n-butyl citrate (ATBC), or a combination thereof, but is not limited thereto.

The plasticizer may be contained in an amount of 1 to 10 wt% and preferably 2 to 8 wt% with respect to the total weight of the polyvinylidene chloride copolymer.

The additive may be a lubricant that helps a flow by lubricating a metal surface to be in contact during processing, molding, and extrusion of the melt, and for example, may include a polyolefin-based wax, an oxidized polyolefin-based wax, an acrylic wax, an ester-based wax, an amide-based wax, a stearic acid salt, derivatives of the additives, or a combination thereof, but is not limited thereto.

The additive may be contained in an amount of 0.01 to 5.0 wt% and preferably 0.1 to 3.5 wt% with respect to the total weight of the polyvinylidene chloride copolymer.

Another embodiment of the present invention provides a method for producing the monolayer film. The production method includes: a) melting and extruding a vinylidene chloride-based polymer mixture; b) stretching the extrudate in at least a biaxial orientation; and c) heat setting the stretched extrudate.

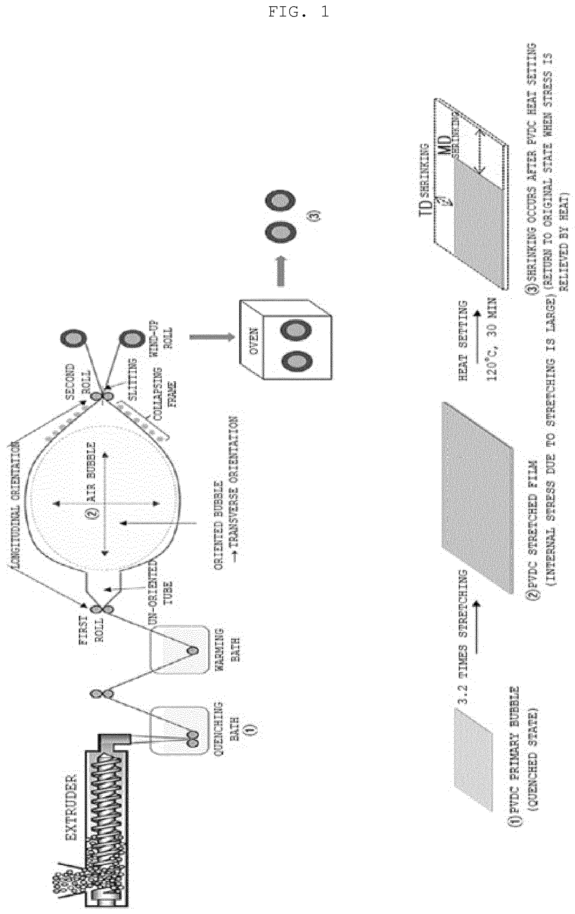

FIG. 1 is a schematic view of a process of producing a PVDC monolayer film. The method for producing the monolayer film of the present invention will be described with reference to FIG. 1. It is characterized in that a primary bubble is formed in the step a) (①), a secondary bubble is formed in the step b) (②), and the stress relaxation and additional crystallization are performed by the heat setting in the step c) (③), and the film is aged at a certain temperature, which prevents the film from being further deformed even when heat is applied when producing a thermal lamination film with another polymer layer.

In the process of producing the polyvinylidene chloride monolayer film, the shrinking of the film mainly occurs in the step c), and an area of the film that cannot not be used due to the shrinking of the film is represented by a difference between an area of the film subjected to the step b) and an area of the film subjected to the step c). As for the shrinkage of the vinylidene chloride-based polymer film, which affects the cost-effectiveness of the film, the crystallization characteristics of the vinylidene chloride-based polymer composition for forming a film is controlled within a specific range, such that a film having a significantly low shrinkage compared to the related art is produced, thereby maximizing a usable area of the film.

Specifically, in the step a), a cylindrical blown film (primary bubble) may be produced using a small-diameter circular die from the vinylidene chloride-based polymer melt from an extruder, but the present invention is not limited thereto.

The extrusion may be performed in an extruder in a temperature range in which a vinylidene chloride-based polymer mixture is melted. When the extrusion is performed in a temperature range excessively higher than the melting temperature, excessive thermal decomposition may occur and bubbles may be generated in the blown film, and in the opposite case, the polymer may not be sufficiently melted and the quality of the film may not be excellent.

As the extruder, a known extruder used in film production may be used, and for example, the vinylidene chloride-based polymer mixture powder may be injected into a single screw and then melted and extruded.

Subsequently, the produced extrudate (blown film) may be quenched in a quenching bath at 5 to 25°C to maintain the shape of the extrudate, and the quenched blown film may be preheated in a warming bath, thereby preparing the heat-stretching step (b) step).

Meanwhile, the vinylidene chloride-based polymer mixture is a mixture containing the first polyvinylidene chloride copolymer (PVDC-VC) and the second polyvinylidene chloride copolymer (PVDC-MA), and is the same as described above.

The b) step is a step of heat-stretching the extrudate in at least a biaxial orientation.

The heat-stretching may be performed at a temperature higher than a glass transition temperature (Tg) of the extrudate and lower than a melting temperature (Tm) of the extrudate. For example, the heat-stretching may be performed at a temperature of 5 to 50°C and preferably 10 to 40°C.

Meanwhile, the first polyvinylidene chloride copolymer (PVDC-VC) has a glass transition temperature of -20 to 20°C and a melting temperature of 140 to 170°C, and the second polyvinylidene chloride copolymer (PVDC-MA) has a glass transition temperature of -20 to 20°C and a melting temperature of 140 to 170°C.

The stretching may be heat-stretching the extrudate in at least a biaxial orientation, and for example, may be performed by simultaneous biaxial stretching in which the extrudate is simultaneously stretched in a longitudinal orientation and a transverse orientation. In this case, a stretch ratio (diameter ratio: die/final film) may be 2 to 8 or 2 to 6 and preferably 2.5 to 5, but the present invention is not limited thereto.

In the step c), the stretched film in the step b) may be subjected to heat setting to relieve internal stress of the stretched film and induce additional crystallization, thereby improving thermal stability.

The heat setting may be performed in an oven at 80 to 150°C for 10 to 60 minutes, and may be preferably performed in an oven at 100 to 130°C for 20 to 40 minutes to produce a final monolayer film.

In the method for producing a monolayer film of the present invention, the steps a), b), and c) may be performed so that the usable area of the polyvinylidene chloride monolayer film may be maximized when producing the monolayer film using a method such as thermal lamination using a polyvinylidene chloride polymer monolayer film. In the case of using the vinylidene chloride-based copolymer composition containing the first polyvinylidene chloride copolymer and the second polyvinylidene chloride copolymer, the crystallinity of the blown film (primary bubble) produced in the step a) is determined according to the composition ratio of the first and second polyvinylidene chlorides and the composition of the comonomer. In addition, in a case where the composition with rapid crystal formation is stretched in the step b), a yield point may be quickly reached when the film is stretched, and when the yield point is exceeded, the film is permanently deformed, and the shrinkage of the film may be significantly reduced. When the crystal formation is late, the yield point is not reached even after stretching, and the film still exists in an elastic region, and thus the shrinkage of the film may be increased. In this case, when the yield point is exceeded by stretching, since the force to restore the film to its original state is lowered, the shrinkage of the final film and the content of the second polyvinylidene chloride copolymer may not be linearly proportional.

Hereinafter, preferred Examples and Comparative Examples of the present invention will be described. However, each of the following Examples is merely a preferred example of the present invention, and the present invention is not limited to the following Examples.

**Examples**

(Examples 1 to 3 and Comparative Examples 1 and 2)

A blend containing the PVDC-based copolymer shown in Table 1 was prepared, and a blown film was processed at 150°C using a 3.5" single screw extruder having L/D = 22.4 manufactured by Egan Machinery. Specific conditions are as described in <Processing Conditions> below.

Subsequently, a film having a width of 34 cm and a thickness of 1 mil (one layer) was produced using the double bubble method for stretching the produced blown film.

In the heat setting process, a 10*10 cm film was placed on a Teflon film, the film was put in an oven preheated to 120°C for 30 minutes and taken out, and then a length deformed in a machine direction (MD) and a transverse direction (TD) was measured. The results are summarized in Table 1.

<Processing Conditions>

Feed rate (kg/hr) = 120
Single screw rpm = 40
Temp (SV) 175-180-156-153-150°C
Quenching bath (°C) = 10
Warming bath (°C) = 25
Stretch ratio (diameter ratio: die/final film) = 3.2

**Evaluation Examples**

**Evaluation Example 1: Evaluation of Shrinkage of Monolayer Film**

[Table 1]

| | PVDC resin composition (wt%) | Shrinkage | |
|---|---|---|---|
| | | MD (%) | TD (%) |
| Comparative Example 1 | PVDC-VC (100) | -20.9 | -14.5 |
| Example 1 | PVDC-VC (80) PVDC-MA (20) | -16.6 | -10.9 |
| Example 2 | PVDC-VC (70) PVDC-MA (30) | -16.7 | -11.3 |
| Example 3 | PVDC-VC (60) PVDC-MA (40) | -16.9 | -10.2 |
| Comparative Example 2 | PVDC-VC (50) PVDC-MA (50) | -16.4 | -12.6 |

(In Table 1, PVDC-VC resin (2051 product of Nantong SKT New Material Co., Ltd., VC monomer content: 12.0 wt%) and PVDC-MA resin (32088.00 product of SK chemicals, MA monomer content: 4.8 wt%) were used as PVDC resins.)

Referring to Table 1, it could be confirmed that in the case of Comparative Example 1 in which the PVDC-MA resin was not added, the shrinkage of the monolayer film was the highest, and in Examples 1 to 3 and Comparative Example 2 in which the PVDC-MA resin was added, the shrinkage was improved.

**Evaluation Example 2: Evaluation of Shape of Double Bubble**

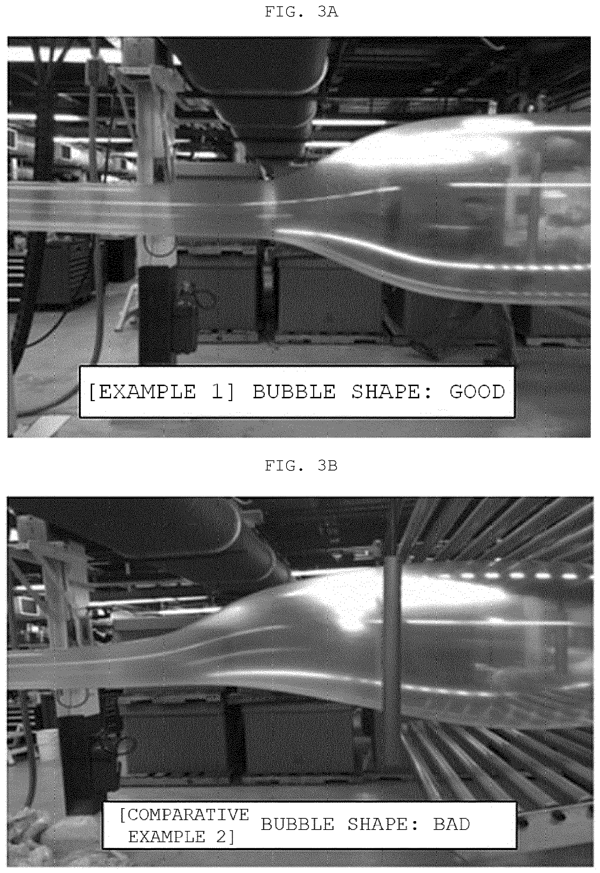

The shapes of the double bubbles produced in Example 1 and Comparative Example 2 were visually observed. The results thereof are illustrated in FIGS. 3A and 3B.

Referring to FIGS. 3A and 3B, it could be confirmed that in the case of Example 1 in which the PVDC-based copolymer of the present invention was contained, the double bubble was formed into a symmetrical shape and a normal film was obtained, but in the case of Comparative Example 2, the double bubble was formed into an asymmetrical shape because 50 wt% or more of the PVDC-MA resin was contained.

**Evaluation Example 3: Formation of Monolayer Film According to Change in Crystallinity of PVDC-Based Resin**

1) Method of Measuring Crystallinity

$$Crystallinity = A/B*100$$

A: Heat of fusion of film subjected to no heat setting
B: Theoretical heat of fusion of VDC homopolymer

The heat of fusion was measured using differential scanning calorimetry (DSC). First, several mg of a sample was placed in an aluminum pan and hermetically sealed, and then the heat of fusion (J/g) was measured in DSC (model name: DSC822) of METTLER TOLEDO under a condition of a heating rate of 20 °C/min. For the theoretical heat of fusion of the VDC homopolymer, the literature "Vinylidene chloride monomer and polymer" (Encyclopedia of chemical technology, 4th edition, vol 24, 1997, John Wiley & Sons, Inc.) was used as reference.

2) Crystallinity and Content of Crystals Having Melting Temperature of 170°C

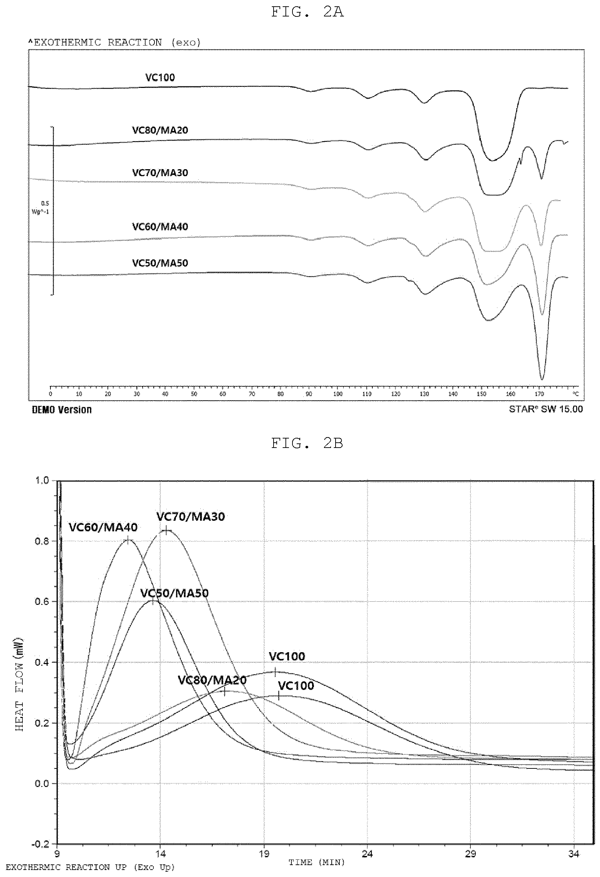

The content of crystals having a melting temperature of 170°C was measured using differential scanning calorimetry (DSC). First, several mg of a sample was placed in an aluminum pan and hermetically sealed, and then a value was calculated by dividing an integral value of a peak of heat of fusion appearing around 170°C in the DSC peak pattern of FIG. 2A obtained by applying the sequence in DSC (model name: DSC822) of METTLER TOLEDO by an integral value of the entire peak.

The crystallinity was calculated by dividing the integral value of the entire peak by the theoretical heat of fusion value of the VDC homopolymer. For the theoretical heat of fusion value, the literature "Vinylidene chloride monomer and polymer" (Encyclopedia of chemical technology, 4th edition, vol 24, 1997, John Wiley & Sons, Inc.) was used as reference.

3) Method of Measuring Crystallization Rate

The crystallization rate was measured using differential scanning calorimetry (DSC). First, several mg of a sample was placed in an aluminum pan and hermetically sealed, and the time at a point when the maximum value of the peak was obtained in the crystallization peak according to the time obtained by applying the following sequence in DSC (model name: DSC Q2000) of TA Instruments was measured.

* DSC crystallization rate measurement sequence

1. Ramp 20°C → 180°C
2. Isothermal for 1 min.
3. Jump to 130°C
4. Isothermal for 60 min.

4) DSC Measurement Sequence

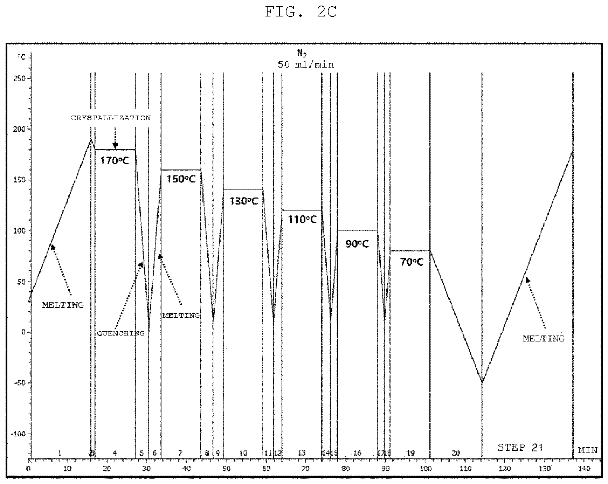

Measurement was performed according to the sequence of 21 steps as illustrated in FIG. 2C. Steps 1 to 20 are processes of forming crystals at each temperature illustrated in FIG. 2C, and Step 21 is a process of measuring the content of crystals in each temperature section by measuring the heat of fusion while melting the formed crystals.

5) Evaluation of Bubble Shape

The bubble shapes obtained by stretching the monolayer films produced in Examples 1 to 3 and Comparative Examples 1 and 2 in the biaxial orientation were visually observed and evaluated based on the following criteria. The results thereof are shown in Table 2.

(Evaluation criteria - symmetric shape: O, asymmetric shape: Δ, impossible to form bubble: X)

[Table 2]

| | PVDC Resin composition (wt%) | Crystallization characteristics | | | Bubble shape |
|---|---|---|---|---|---|
| | | Content of crystals melted at 170°C (%) | Crystallization rate (min) | Crystallinity (%) | |
| Comparative Example 1 | PVDC-VC (100) | 0.00 | 19.6 | 33.0 | O |
| Example 1 | PVDC-VC (80) PVDC-MA (20) | 11.68 | 17.1 | 35.0 | O |
| Example 2 | PVDC-VC (70) PVDC-MA (30) | 14.94 | 14.3 | 33.9 | O |
| Example 3 | PVDC-VC (60) PVDC-MA (40) | 28.29 | 12.4 | 37.7 | O |
| Comparative Example 2 | PVDC-VC (50) PVDC-MA (50) | 39.28 | 13.6 | 37.5 | X |

Referring to Table 2, it can be seen that the crystallinities of the compositions used in Comparative Examples and Examples do not differ significantly depending on the composition. However, it can be seen that the shrinkage and the stability of the bubble shape of the film subjected to the step c) are significantly different. The shrinkage of the film is related to the crystallization rate. The deformation mode when the film is stretched may be completely different depending on the rate of crystal formation in the step a) and immediately before stretching in the step b). The monolayer film produced in Comparative Example 1 in which the rate of crystal formation is slow may have a large elastic region while the amorphous region is stretched when the monolayer film is stretched. On the other hand, in the monolayer films produced in Examples 1 to 3 and Comparative Example 2, the rate of crystal formation is relatively fast, and the elastic properties to be restored beyond the yield point are lost when the film is stretched, and thus the deformation of the monolayer film may be reduced even when the heat setting in the step c) is performed (see Table 1).

Meanwhile, the content of crystals melted at 170°C is a content of crystals that are formed most quickly, and as in Examples 1 to 3, at an appropriate level of the content of crystals, an excellent bubble shape is shown in the step b). However, as in Comparative Example 2, when the content of crystals initially formed is too large, deformation during stretching becomes difficult, such that the bubble is not formed well and the bubble shape may be asymmetric.

Although embodiments of the present invention have been described, the present invention is not limited to the embodiments, and may be prepared in various different forms, and it will be apparent to those skilled in the art to which the present invention pertains that the embodiments may be implemented in other specific forms without departing from the spirit or essential feature of the present invention. Therefore, it is to be understood that the embodiments described hereinabove are illustrative rather than restrictive in all aspects.

Claims

1. A monolayer film comprising a vinylidene chloride-based copolymer composition containing:

  a vinyl chloride comonomer-containing first polyvinylidene chloride copolymer (PVDC-VC); and
  a methyl acrylate comonomer-containing second polyvinylidene chloride copolymer (PVDC-MA),
  wherein a crystallinity of the vinylidene chloride-based copolymer composition is 25 to 45%.

2. The monolayer film of claim 1, wherein the first polyvinylidene chloride copolymer is contained in an amount of more than 50 wt% and less than 90 wt% with respect to the total weight of the monolayer film, and
the second polyvinylidene chloride copolymer is contained in an amount of more than 10 wt% and less than 50 wt% with respect to the total weight of the monolayer film.

3. The monolayer film of claim 1, wherein the first polyvinylidene chloride copolymer contains 10 to 25 wt% of the vinyl chloride comonomer, and
the second polyvinylidene chloride copolymer contains 2 to 8 wt% of the methyl acrylate comonomer.

4. The monolayer film of claim 1, wherein a crystallization rate of the vinylidene chloride-based copolymer composition is 7 to 25 minutes.

5. The monolayer film of claim 1, wherein a content of crystals melted at 170°C of the vinylidene chloride-based copolymer composition is 5 to 45% of the total content of crystals.

6. The monolayer film of claim 1, further comprising a plasticizer, an additive, or a combination thereof.

7. The monolayer film of claim 6, wherein the plasticizer includes epoxidized soybean oil (ESO), dibutyl sebacate (DBS), acetyl tri-n-butyl citrate (ATBC), or a combination thereof.

8. The monolayer film of claim 6, wherein the additive includes a polyolefin-based wax, an oxidized polyolefin-based wax, an acrylic wax, an ester-based wax, an amide-based wax, a stearic acid salt, derivatives of the additives, or a combination thereof.

9. A method for producing a monolayer film, comprising:

    a) melting and extruding a vinylidene chloride-based polymer mixture;
    b) heat-stretching the extrudate in at least a biaxial orientation; and
    c) heat setting the stretched product.

10. The method of claim 9, wherein the step b) is performed by simultaneous biaxial stretching in which the extrudate is simultaneously stretched in a longitudinal orientation and a transverse orientation.

11. The method of claim 9, wherein the step b) is performed at a temperature higher than a glass transition temperature (Tg) of the extrudate and lower than a melting temperature (Tm) of the extrudate.

12. A container comprising the monolayer film of any one of claims 1 to 8.

FIG. 1

EXTRUDER

FIRST ROLL

SECOND ROLL

LONGITUDINAL ORIENTATION

② AIR BUBBLE

SLITTING

COLLAPSING FRAME

WIND-UP ROLL

UN-ORIENTED TUBE

QUENCHING BATH ①

WARMING BATH

ORIENTED BUBBLE → TRANSVERSE ORIENTATION

OVEN

③

① PVDC PRIMARY BUBBLE (QUENCHED STATE)

3.2 TIMES STRETCHING

② PVDC STRETCHED FILM (INTERNAL STRESS DUE TO STRETCHING IS LARGE)

HEAT SETTING 120°C, 30 MIN

TD SHRINKING
MD SHRINKING

③ SHRINKING OCCURS AFTER PVDC HEAT SETTING (RETURN TO ORIGINAL STATE WHEN STRESS IS RELIEVED BY HEAT)

FIG. 2A

FIG. 2B

FIG. 2C

EP 4 257 634 A1

FIG. 3A

[EXAMPLE 1] BUBBLE SHAPE: GOOD

FIG. 3B

[COMPARATIVE EXAMPLE 2] BUBBLE SHAPE: BAD

## INTERNATIONAL SEARCH REPORT

| International application No. |
| --- |
| **PCT/KR2021/019321** |

**A.    CLASSIFICATION OF SUBJECT MATTER**

**C08J 5/18**(2006.01)i; **C08L 27/08**(2006.01)i; **C08K 5/00**(2006.01)i; **B29C 48/08**(2019.01)i; **B29C 55/16**(2006.01)i

According to International Patent Classification (IPC) or to both national classification and IPC

**B.    FIELDS SEARCHED**

Minimum documentation searched (classification system followed by classification symbols)

C08J 5/18(2006.01); B29C 55/12(2006.01); B32B 27/30(2006.01); B32B 5/18(2006.01); B65D 65/40(2006.01); C08J 7/00(2006.01); C08L 23/30(2006.01); C08L 27/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 염화비닐리덴(vinylidene chloride), 염화비닐(vinyl chloride), 메틸아크릴레이트 (methyl acrylate), 공중합체(copolymer), 단층 필름(monolayer film), 열처리(heat treatment), 이중 버블 압출 공정(double bubble extrusion process), 용기(container), 유리 전이 온도(glass transition temperature), 용융 온도(melting temperature)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2002-220504 A (ASAHI KASEI CORP.) 09 August 2002 (2002-08-09)<br>       See paragraphs [0011]-[0045] and [0063]. | 1-8,12 |
| A | | 9-11 |
| X | JP 2008-162044 A (ASAHI KASEI CHEMICALS CORP.) 17 July 2008 (2008-07-17)<br>       See paragraphs [0012], [0028] and [0039]. | 9-11 |
| A | JP 5118486 B2 (KUREHA CORP.) 16 January 2013 (2013-01-16)<br>       See entire document. | 1-12 |
| A | JP 2013-180778 A (ASAHI KASEI CHEMICALS CORP. et al.) 12 September 2013 (2013-09-12)<br>       See entire document. | 1-12 |

☑ Further documents are listed in the continuation of Box C.      ☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **08 April 2022** | **08 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2021/019321** |

**C.        DOCUMENTS CONSIDERED TO BE RELEVANT**

| Category* | Citation of document, with indication, where appropriate, of the relevant passages | Relevant to claim No. |
| --- | --- | --- |
| A | US 2005-0271877 A1 (GINOSSATIS, Dimitris) 08 December 2005 (2005-12-08)<br>    See entire document. | 1-12 |

Form PCT/ISA/210 (second sheet) (July 2019)

**INTERNATIONAL SEARCH REPORT**
Information on patent family members

International application No.

**PCT/KR2021/019321**

| Patent document cited in search report | | | Publication date (day/month/year) | Patent family member(s) | | | Publication date (day/month/year) |
|---|---|---|---|---|---|---|---|
| JP | 2002-220504 | A | 09 August 2002 | None | | | |
| JP | 2008-162044 | A | 17 July 2008 | JP | 4889478 | B2 | 07 March 2012 |
| JP | 5118486 | B2 | 16 January 2013 | CN | 101228232 | A | 23 July 2008 |
| | | | | CN | 101228232 | B | 15 December 2010 |
| | | | | TW | 200722472 | A | 16 June 2007 |
| | | | | TW | I388610 | B | 11 March 2013 |
| | | | | WO | 2007-013647 | A1 | 01 February 2007 |
| JP | 2013-180778 | A | 12 September 2013 | None | | | |
| US | 2005-0271877 | A1 | 08 December 2005 | EP | 1598177 | A1 | 23 November 2005 |
| | | | | EP | 1598178 | A2 | 23 November 2005 |
| | | | | EP | 1598178 | A3 | 18 January 2006 |
| | | | | EP | 1598178 | B1 | 09 January 2013 |
| | | | | US | 7160604 | B2 | 09 January 2007 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3461369 B

- JP 7076643 A

**Non-patent literature cited in the description**

- Vinylidene chloride monomer and polymer. Encyclopedia of chemical technology. John Wiley & Sons, Inc, 1997, vol. 24